# EUROPÄISCHE PATENTSCHRIFT

(11) **EP 0 380 769 B1**
(45) Veröffentlichungstag und Bekanntmachung des Hinweises auf die Patenterteilung: **08.09.1993**
(21) Anmeldenummer: 89120746.6
(22) Anmeldetag: 09.11.1989
(51) Int. Cl.: F16D 65/02

(54) **Scheibenbremse**
Disc brake
Frein à disque

(30) Priorität: 31.01.1989 DE 3902790; 06.06.1989 DE 3918369
(43) Veröffentlichungstag der Anmeldung: 08.08.1990
(73) Patentinhaber: ITT Automotive Europe GmbH, 60488 Frankfurt (DE)
(72) Erfinder: Dreilich, Ludwig, Dr., D-6242 Kronberg (DE); Egerer, Thomas, D-6367 Karben 1 (DE); Wörsdorfer, Karl-Fr., D-6501 Budenheim (DE)

(56) Entgegenhaltungen:
- DE-A- 2 236 536
- DE-A- 2 242 877
- DE-A- 3 044 393
- US-A- 4 154 322
- US-A- 4 155 430
- US-A- 4 243 123

## Beschreibung

Die Erfindung betrifft Scheibenbremsen bzw. Bremsbacken für Schreibenbremsen nach einem der Oberbegriffe der Ansprüche 1, 2, 3 oder 6.

Bei Scheibenbremsen tritt immer wieder starkes Bremsquietschen oder niederfrequentere Geräusche auf. Dies wurde bisher z.B. durch Auswahl des Bremsbelagmaterials oder das Anbringen einer Zwischenschicht zwischen Bremsbelag und Belagrückenplatte (DE-OS 36 17 846) versucht zu beseitigen.

Aus der US-PS 4,691,810 ist weiterhin bekannt, daß beim Bremsen die Bremsbacke zu schwingen beginnt und diese Schwingung Ursache der Bremsgeräusche ist. Außerdem wird dort erläutert, daß sich beim Bremsen ein Schwingungsknoten im Zentrum der Bremsbacke und Schwingungsbäuche im Bereich der seitlichen Führungen der Bremsbacke ausbilden. Um Bremsquietschen zu verhindern - wenigstens an der indirekt betätigten Bremsbacke - wird dort vorgeschlagen, die Arme des Bremsgehäuses in spezieller Weise an der Belagrückenplatte der nicht-kolbenseitigen Bremsbacke zu befestigen und über diese Befestigung auch die Kraft zu übertragen. Quietschen des kolbenseitigen Belags ließ sich jedoch bisher durch solche Maßnahmen nicht vermeiden.

Die Erfindung beruht daher auf der Aufgabe, Bremsgeräusche bei Scheibenbremsen wirkungsvoll und dauerhaft zu verhindern unter Verwendung der bisher in der Bremse eingesetzten Teile.

Die Aufgabe wird durch die kennzeichnenden Teile der Ansprüche 1,2,3 oder 6 unabhängig voneinander gelöst, wobei auch mehrere Maßnahmen gleichzeitig zur Anwendung kommen können. Die verschiedenen Lösungen beruhen alle auf dem gleichen Prinzip. In den meisten Fällen ist die Ursache der Bremsgeräusche nämlich das Zusammenfallen der Resonanzfrequenzen aller oder mehrerer Bauteile. Gewöhnlich tritt Quietschen bei der gemeinsamen Eigenfrequenz auf. Verändert man nun die Masse eines oder mehrerer Bauteile durch Anbringen von Zusatzmasse oder Entfernen von Masse, so ist es möglich, auch die Eigenfrequenzen gegeneinander zu verschieben. Im Idealfall können sie so eingestellt werden, daß sie sich gegenseitig nicht beeinflussen und vor allem nicht verstärken.

Gemäß Anspruch 1 werden die Zusatzmassen bei Festsattel-Scheibenbremsen in vorteilhafter Weise in Umfangsrichtung am Gehäuse angebracht, so daß sie radial neben der Bremsscheibe positioniert sind und daher keinen zusätzlichen Einbauraum innerhalb der Felgenkontur beanspruchen.

Eine günstige Weiterbildung der Erfindung gemäß Anspruch 2 sieht vor, die Zusatzmasse bei Schwimmsattel-Scheibenbremsen und insbesondere bei sogenannten innen umgreifenden Scheibenbremsen an der der Fahrzeugmitte zugewandten Seite des Bremsgehäuses anzubringen. Diese Maßnahme ist besonders platzsparend.

Maßnahmen, die die Bremsbacken betreffen, erläutern die Ansprüche 3 bis 5.

Durch Befestigung insbesondere von Rundstahl an den insbesondere hammerförmigen Fortsetzungen der kolbenseitigen Belagrückenplatte wird das Schwingungsverhalten einer Bremsbacke verändert. Durch Anpassung der Länge, also Masse, des Rundstahls kann ein Quietschen völlig verhindert werden. Die Befestigung erfolgt beispielsweise durch Kleben, Nieten, Einpressen, Schweißen oder Einschrauben in eine Bohrung.

Das Ankleben von Zusatzmassen mittels einer elastischen Klebeschicht gemäß Anspruch 6 dient vor allem zur Verhinderung niederfrequenter Geräusche beim Bremsen. Durch das gegenphasige Schwingen von Bauteil und Zusatzmasse, wird die Schwingung stark gedämpft und verschwindet so rasch.

Anhand der Fig. 1 bis 5 sollen mögliche Ausführungsformen der Erfindung erläutert werden. Es zeigen
- Fig. 1: einen axialen Schnitt durch eine Bremsbacke mit Rundstahl,
- Fig. 2: eine Draufsicht auf eine Bremsbacke,
- Fig. 3: eine Draufsicht auf eine Festsattelscheibenbremse (schematisch) mit in Umfangsrichtung am Bremsgehäuse befestigten Zusatzmassen,
- Fig. 4: eine innen umgreifende Scheibenbremse mit Zusatzmasse in axialem Schnitt und
- Fig. 5: schematisch einen Bremsträger mit mittels elastischem Kleber angeklebten Zusatzmassen.

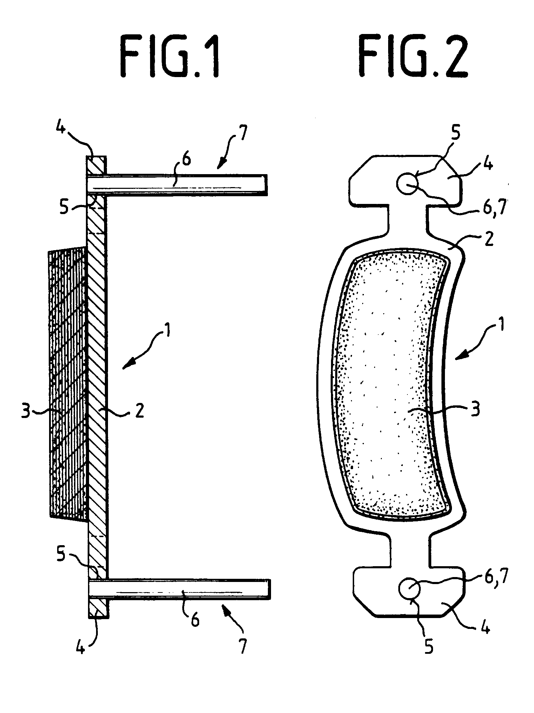

Fig. 1 zeigt einen Schnitt durch eine Bremsbacke 1 mit dem auf der Belagrückenplatte 2 befestigten Bremsbelag 3. Im Halterungs- und Führungsbereich 4 dieser Belagrückenplatte 2 befindet sich eine Bohrung 5, in der ein Rundstahl 6 befestigt ist.

In Fig. 2 ist eine Draufsicht auf die Bremsbacke 1 dargestellt. Die Blickrichtung ist von der - nicht dargestellten - Bremsscheibe zum Bremskolben hin. Es wird nur ein Teil der Bremsbacke 1 mit Belagrückenplatte 2, Bremsbelag 3 und hammerförmiger Fortsetzung 4 gezeigt. In dieser hammerförmigen Fortsetzung 4, die zur Abstützung und Führung der Bremsbacke 1 gegen Halter und Bremssattel (beide nicht dargestellt) dient, erkennt man die Bohrung 5, in der das schwingungsverändernde Element 7 befestigt ist.

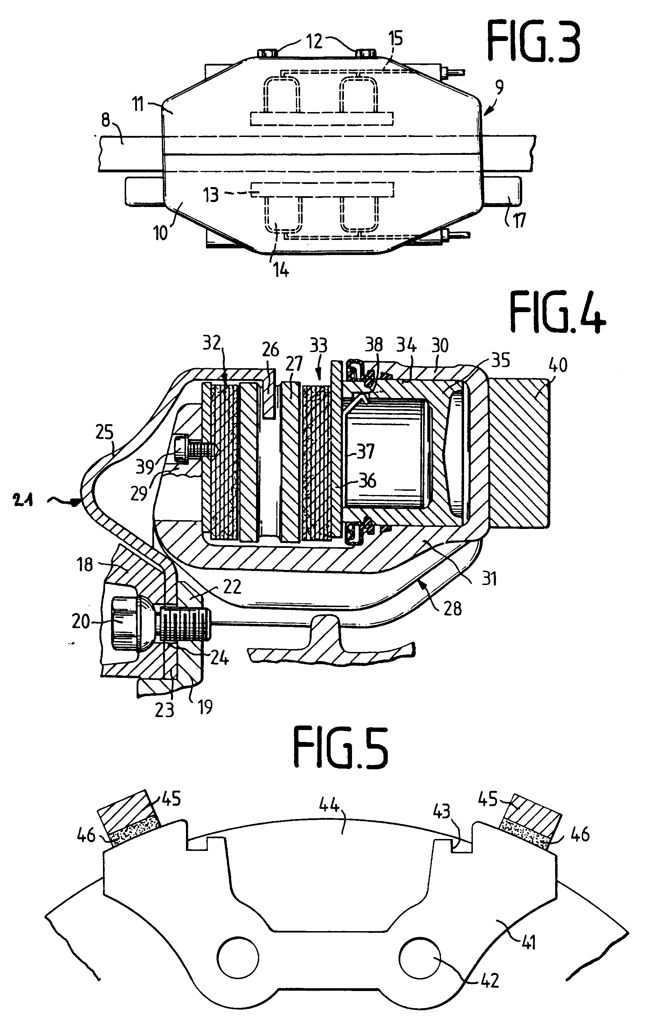

Fig. 3 zeigt in schematischer Darstellung eine Festsattelscheibenbremse mit einem die Bremsscheibe 8 übergreifenden Bremsgehäuse 9, das aus zwei Gehäuseteilen 10,11 besteht. Das Gehäuseteil 11 ist durch Schrauben 12 mit dem nicht gezeigten Achsschenkel verbunden. Das Bremsgehäuse 9 weist in bekannter Weise nicht näher erläuterte Anschlüsse auf. Angedeutet sind die Bremsbacken 13, die sie beaufschlagenden Kolben 14 und Druckmittelkanäle 15, die Bremsflüssigkeit zu den Kolben 14 leiten. In Umfangsrichtung sind am Gehäuseteil 10 auf beiden Seiten Zusatzmassen 17 neben der Bremsscheibe 8 angebracht, die durch Änderung der Gehäusemasse die Resonanzfrequenz des Bremsgehäuses 9 verändern. Diese Zusatzmassen 17 können auch, anders als in der Fig. dargestellt, direkt an eines der Gehäuseteile 10,11 angegossen sein, so daß eine nachträgliche Befestigung entfällt.

Fig. 4 zeigt in axialem Schnitt eine innen umgreifende Scheibenbremse. Vom Fahrzeugrad ist nur ein Teil der Radschüssel 18 und des Radlagergehäuses 19 dargestellt. Mit einem Schraubbolzen 20 wird ein Bremsscheibenträger 21 am Flansch 22 befestigt, wobei der Bremsscheibenträger 21 zwischen dem Flansch 22 und der Radschüssel 18 angeordnet ist. Der Bremsscheibenträger 21 weist einen radial innen liegenden, im wesentlichen kreisringförmigen Befestigungsabschnitt 23 auf, in dem Bohrungen 24 zur Durchführung der Schraubbolzen 20 vorgesehen sind und einen der Kontur der Radschüssel 18 angepaßten Trägerabschnitt 25. Der Trägerabschnitt 25 bildet einen Endabschnitt, welcher im wesentlichen achsparallel verläuft und an dem ein Verbindungsring 26 befestigt ist oder spezielle Befestigungsabschnitte angeformt sind. Mit dem Verbindungsring 26 ist ein Reibring 27 verbunden, welcher die eigentliche Bremsscheibe bildet.

Die innen umgreifende Scheibenbremse weist ferner ein Bremsgehäuse 28 auf, welches im wesentlichen U-förmig ausgebildet ist, und zwei sich radial nach außen erstreckende Schenkel 29,30 aufweist, die über ein Brückenteil 31 miteinander verbunden sind. Zu beiden Seiten des Reibrings 27 sind Bremsbacken 32,33 angeordnet, die vom U-förmigen Bremsgehäuse 28 umgriffen werden. Zur Betätigung der Scheibenbremse weist der innen liegende Schenkel 30 eine Zylinderbohrung 34 auf, in der ein Kolben 35 axial verschiebbar angeordnet ist. Der Kolben 35 beaufschlagt unmittelbar die innen liegende Bremsbacke 33, wodurch als Reaktion das Bremsgehäuse 28 entgegengesetzt nach innen verschoben wird und dadurch auch die außen liegende Backe 32 beaufschlagt wird.

Zur Sicherung der Bremsbacke 33 gegen eine Bewegung radial nach außen ist an der Belagrückenplatte 36 eine Feder 37 befestigt, die in eine im Kolben 35 vorgesehene Ringnut 38 eingreift. Die äußere Bremsbacke 32 ist mittels zweier Befestigungsschrauben 39 am äußeren Schenkel 29 des Bremsgehäuses 28 angeschraubt. An der dem Kolben 35 abgewandten Seite des Schenkels 30 ist eine Zusatzmasse 40 befestigt, die die Eigenfrequenz des Bremsgehäuses 28 verschiebt.

Fig. 5 zeigt schematisch einen Bremsträger 41 in Draufsicht. Man erkennt die Bohrungen 42 zur Befestigung am Achsschenkel und die Ausnehmungen 43 zur Führung von nicht gezeigten Bremsbacken, außerdem ist die Kontur der Bremsscheibe 44 angedeutet. Neben den Ausnehmungen 43 sind Zusatzmassen 45 angeklebt. Die elastische Kleberschicht 46 ermöglicht eine Schwingung der Zusatzmasse 45 gegen den Träger 41, daher werden Schwingungen schnell gedämpft oder entstehen erst gar nicht.

### Bezugszeichenliste

- 1: Bremsbacke
- 2: Belagrückenplatte
- 3: Bremsbelag
- 4: Führungsbereich der Bremsbacke (hammerförmiger Fortsatz)
- 5: Bohrung
- 6: Rundstahl
- 7: schwingungsveränderndes Element
- 8: Bremsscheibe
- 9: Bremsgehäuse
- 10: Gehäuseteil
- 11: Gehäuseteil
- 12: Schraube
- 13: Bremsbacke
- 14: Bremskolben
- 15: Druckmittelkanal
- 17: Zusatzmasse
- 18: Radschüssel
- 19: Radlagergehäuse
- 20: Schraubbolzen
- 21: Bremsscheibenträger
- 22: Flansch
- 23: Befestigungsabschnitt
- 24: Bohrung
- 25: Trägerabschnitt
- 26: Verbindungsring
- 27: Reibring
- 28: Bremsgehäue
- 29: Schenkel
- 30: Schenkel
- 31: Brückenteil
- 32: Bremsbacke
- 33: Bremsbacke
- 34: Zylinderbohrung
- 35: Kolben
- 36: Belagrückenplatte
- 37: Feder
- 38: Ringnut
- 39: Befestigungsschraube
- 40: Zusatzmasse
- 41: Bremsträger
- 42: Bohrung
- 43: Ausnehmung
- 44: Bremsscheibe
- 45: Zusatzmasse
- 46: Kleberschicht, elastisch

## Patentansprüche

1. Festsattel-Scheibenbremse für Kraftfahrzeuge, mit einem Bremsgehäuse (9) aus Metallguß, das den Rand einer Bremsscheibe (8) umgreift und zwei beiderseits der Bremsscheibe angeordnete Gehäuseteile (10,11) aufweist, wobei das eine Gehäuseteil (11) am Achsschenkel des Fahrzeugs befestigt ist, dadurch **gekennzeichnet**, daß an den beiden in Umfangsrichtung der Bremsscheibe (8) außenliegenden Seiten des anderen Gehäuseteils (10) in einem radial innerhalb des Bremsscheibenrandes liegenden Bereich jeweils eine zusätzlich angebrachte zur schwingungsdämpfung dienende Zusatzmasse (17), die vom Bremsgehäuse (9) im wesentlichen in Umfangsrichtung absteht, befestigt ist, beispielsweise durch Kleben.

2. Schwimmsattel-Scheibenbremse für Kraftfahrzeuge, mit einem am Achsschenkel des Fahrzeugs starr befestigten Bremsträger und einem am Bremsträger axial verschiebbar angeordneten Bremsgehäuse (28), dadurch **gekennzeichnet**, daß eine zur schwingungsdämpfung dienende Zusatzmasse (40) an der in axialer Richtung am weitesten innen - bezogen auf das Fahrzeug - liegenden Seite des Bremsgehäuses (28), insbesondere an einem Bremszylinder, zusätzlich angebracht und befestigt ist, beispielsweise durch Kleben.

3. Bremsbacke für Scheibenbremsen, mit einer Belagrückenplatte (2), einem Bremsbelag (3) und mit - insbesondere hammerkopfförmigen - Fortsetzungen (4) der Belagrückenplatte (2), die seitlich - insbesondere in Umfangsrichtung - über den Bremsbelag (3) hinausragen, dadurch **gekennzeichnet**, daß zumindest an einer Fortsetzung (4) ein längliches schwingungsveränderndes Element (7) befestigt ist, das sich im wesentlichen senkrecht zur Belagrückenplatte (2) von deren bremsbelagfreier Rückseite weg erstreckt.

4. Bremsbacke nach Anspruch 3, dadurch **gekennzeichnet**, daß als schwingungsveränderndes Element (7) ein Rundstahl (6) verwendet wird.

5. Bremsbacke nach Anspruch 4, dadurch **gekennzeichnet**, daß der Rundstahl (6) an der kolbenseitigen Bremsbacke (1) bremsscheibeneinlaufseitig und/oder auslaufseitig befestigt ist.

6. Scheibenbremse, für Kraftfahrzeuge, dadurch **gekennzeichnet**, daß an der/den Stelle(n) mit der größten Schwingungsamplitude eine oder mehrere Zusatzmasse(n) (45) angeklebt ist/sind, wobei die Klebeschicht (46) elastisch ist und insbesondere eine gegenphasige Schwingung von Masse (45) und Bauteil (41) gegeneinander ermöglicht.

7. Scheibenbremse nach Anspruch 6, dadurch **gekennzeichnet**, daß zum Kleben Acrylat- oder Silikonkleber verwendet ist.

8. Scheibenbremse nach Anspruch 6 oder 7, dadurch **gekennzeichnet**, daß die Massen (45) am Bremsträger (41) neben den Bremsbackenführungen (Ausnehmung 43) angeklebt sind.

## Claims

1. A fixed caliper-type disc brake for automotive vehicles, comprising a brake housing (9) cast from metal which straddles the edge of a brake disc (8) and comprises two housing sections (10, 11) arranged on either side of the brake disc, the one housing section (11) being secured to the steering knuckle of the vehicle,
**characterized** in that on the two sides of the other housing section (10) of the brake disc (8) which are disposed outwardly in circumferential direction, in an area lying radially within the brake disc edge, an additionally applied extra mass (17) serving for the vibration attenuation is attached in each case which projects from the brake housing (9) substantially in circumferential direction.

2. A floating-caliper disc brake for automotive vehicles, comprising a brake carrier which is rigidly secured to the steering knuckle of the vehicle, and comprising a brake housing (28) which is axially slidably arranged on the brake carrier,
**characterized** in that an extra mass (40) serving for the vibration attenuation is additionally applied and attached, e.g. by cementing, to the side of the brake housing (28), in particular to a brake cylinder, which side - in respect of the vehicle - is disposed innermost in axial direction.

3. A brake shoe for disc brakes, comprising a pad backing plate (2), a brake pad (3) and - in particular hammer-head-shaped - extensions (4) of the pad backing plate (2) which project laterally - in particular in circumferential direction - beyond the brake pad (3),
**characterized** in that an elongated vibration-changing element (7) is attached at least to one extension (4) and extends substantially vertically to the pad backing plate (2) away from said's back side that is devoid of brake lining.

4. A brake shoe as claimed in claim 3,
**characterized** in that the vibration-changing element (7) is a round steel bar (6).

5. A brake shoe as claimed in claim 4,
**characterized** in that the round steel bar (6) is attached to the piston-sided brake shoe (1) on the brake disc's inlet side and/or outlet side.

6. A disc brake for automotive vehicles,
**characterized** in that one or more extra mass(es) (45) is/are cemented to the point(s) having the largest vibration amplitude, the adhesive layer (46) being elastical and, in particular, permitting an inversely phased vibration of mass (45) and component (41) relative to one another.

7. A disc brake as claimed in claim 6,
**characterized** in that acrylate or silicone adhesives are used for cementing.

8. A disc brake as claimed in claim 6 or 7,
**characterized** in that the masses (45) are cemented to the brake carrier (41) in side-by-side relationship with the brake shoe guidances (recess 43).

## Revendications

1. Frein à disque à étrier fixe pour véhicule automobile, comprenant un boîtier de frein (9), formé d'une pièce coulée en métal, qui enveloppe le bord d'un disque de frein (8) et comporte deux parties de boîtier (10, 11) disposées de part et d'autre du disque de frein, l'une (11) de ces parties de boîtier étant fixée sur la fusée d'essieu du véhicule, caractérisé en ce que, sur chacun des deux côtés de l'autre pièce de boîtier (10) qui sont situés à l'extérieur suivant la direction circonférentielle du disque de frein (8), il est fixé, par exemple par collage, dans une zone située radialement à l'intérieur par rapport au bord du disque de frein, une masse additionnelle (17), montée d'une manière supplémentaire et servant à l'amortissement des vibrations, qui fait saillie par rapport au boîtier de frein (9) pratiquement suivant la direction circonférentielle.

2. Frein à disque à étrier flottant pour véhicule automobile, comprenant un support de frein, fixé rigidement sur la fusée d'essieu du véhicule, et un boîtier de frein (28) disposé sur le support de frein de façon à pouvoir coulisser axialement, caractérisé en ce qu'une masse additionnelle (40), servant à l'amortissement des vibrations, est montée d'une manière supplémentaire et fixée, par exemple par collage, sur le côté du boîtier de frein (28) qui est situé le plus loin vers l'intérieur dans la direction axiale par rapport au véhicule, notamment sur un cylindre de frein.

3. Plaquette de frein pour frein à disque, comprenant une plaque porte-garniture (2), une garniture de frein (3) et des prolongements (4) de la plaque portegarniture (2), notamment en forme de tête de marteau, qui font saillie latéralement par rapport à la garniture de frein (3), notamment suivant la direction circonférentielle, caractérisée en ce qu'au moins sur un prolongement (4), il est fixé un élément allongé (7), modifiant le comportement de vibration, qui s'étend d'une manière pratiquement perpendiculaire à la plaque porte-garniture (2) à partir de la face arrière ne portant pas de garniture de frein.

4. Plaquette de frein suivant la revendication 3, caractérisée en ce qu'un rond en acier (6) est utilisé comme élément (7) modifiant le comportement de vibration.

5. Plaquette de frein suivant la revendication 4, caractérisée en ce que le rond en acier (6) est fixé, du côté par lequel le frein à disque arrive et/ou du côté par lequel le frein à disque s'éloigne, sur la plaquette de frein (1) située du côté du piston.

6. Frein à disque, pour véhicule automobile, caractérisé en ce qu'une ou plusieurs masses additionnelles (45) sont collées à l'emplacement ou aux emplacements présentant la plus grande amplitude de vibration, tandis que la couche adhésive (46) est élastique et permet notamment une oscillation en opposition de phase de la masse (45) et de la pièce structurelle (41).

7. Frein à disque suivant la revendication 6, caractérisé en ce qu'on utilise pour le collage un adhésif à base d'acrylate ou de silicone.

8. Frein à disque suivant l'une des revendications 6 et 7, caractérisé en ce que les masses (45) sont collées sur le support de frein (41) à côté des guides de garniture de frein (évidement 43).
